# EUROPEAN PATENT SPECIFICATION

(11) **EP 2 762 717 B1**
(45) Date of publication and mention of the grant of the patent: **20.04.2016**
(21) Application number: 13153768.0
(22) Date of filing: 01.02.2013
(51) Int. Cl.: F02M 37/00, F02M 55/00

(54) **Unheated fuel-line assembly and method of detecting leakage at and/or in a fuel line**
Ungewärmte Kraftstoffleitungsanordnung und Verfahren zum Erkennen einer Leckage an oder in einer Kraftstoffleitung
Ensemble de conduites de carburant non chauffées et procédé de détection de fuite au niveau de et/ou dans une conduite de carburant

(43) Date of publication of application: 06.08.2014
(73) Proprietor: Hanil Tube Corporation, Incheon 404-722 (KR)
(72) Inventor: Choo, Seong-Hwa,, 407-053 Incheon (KR)
(74) Representative: Rohmann, Michael

(56) References cited:
- EP-A1- 1 705 050
- FR-A1- 2 538 076
- FR-A1- 2 911 945
- GB-A- 2 258 694

## Description

The invention relates to an unheated fuel-line assembly, in particular for use in a motor vehicle. Thus, this concerns an unheated assembly comprising a fuel line, in particular a motor-vehicle fuel line. The invention further relates to a method of detecting leakage at and/or in a fuel line using a fuel-line assembly according to the invention.

It is already known from practice to surround an inner tube formed as a fuel line with an outer tube. In this case, the inner surface of the outer tube normally directly engages the inner tube. The outer tube serves to protect the inner tube against disadvantageous mechanical damage - in particular in the engine compartment - and also against disadvantageously high temperatures in the engine compartment, or against fire occurring in particular in the engine compartment. These protective functions can be improved. Furthermore, the inner tube can develop leaks, namely in particular when sliding the fuel-line assembly composed of the inner and outer tubes onto a connector or onto a so-called quick connector. The disadvantage of the known fuel-line assemblies is that leaks of the inner tube cannot be readily found or detected. Especially in the region of the connector or the quick connector, the fuel-line assembly has to be removed or pulled off in a complicated manner from the connector or quick connector so as to be able to detect leakage. These measures can also be improved. An example of such a fuel pipe is shown in EP-1705050.

In the light of this, the object of the invention is to provide a fuel-line assembly of the above-described kind, by means of which the described disadvantages can be avoided in an effective and functionally reliable manner. The invention has the further object of providing a method of detecting leakage in a fuel line.

In order to solve the technical problem, the invention teaches in the first instance an unheated fuel-line assembly, in particular for use in a motor vehicle, where an inner tube is provided as a fuel line and an outer tube is provided that surrounds the inner tube with a spacing a, and where a plurality of grooves formed in the inner surface of the outer tube and face toward the inner tube, the grooves extending at least over a portion of the length of the outer tube longitudinally of the tube. - Within the scope of the invention, unseated means in particular that the inner tube is not heated and the space between the outer tube and the inner tube is also not heated. It lies also within the scope of the invention that the outer tube is not heated.

Furthermore, within the scope of the invention the inner tube and/or the outer tube consist/consists of at least one plastic material. Advantageously, the inner tube and/or the outer tube are extruded. The inner tube and/or the outer tube can be formed as a single- or as a multi-layer tube. It is recommended that the outer tube has a smooth and unprofiled outer surface.

According to a preferred embodiment of the invention, the inner tube and/or the outer tube are/is cylindrical or substantially cylindrical. It is recommended that the inner tube be of circular cross-section. Preferably, the inner tube is concentric to the outer tube or the inner tube is surrounded concentrically by the outer tube. Advantageously, the inner tube and the outer tube are coaxial. In a particularly advantageous configuration of the invention the spacing a from the inner surface of the outer tube to the outer surface of the inner tube is 0.3 to 2 mm, preferably 0.4 to 1.7 mm. Here, the spacing a is measured at the groove-free regions of the inner surface of the outer tube. Advantageously, the spacing a is constant or substantially constant all around the outer tube and the inner tube. It has proven to be of advantage that the thickness d of the outer tube is 2.3 to 3.0 mm, preferably 2.4 to 2.8 mm, and more preferably 2.5 to 2.7 mm. The thickness d of the outer tube is measured at the groove-free regions of the inner surface of the outer tube. It is recommended that the inner diameter of the outer tube is 4.5 to 7.0 mm and preferably 5.0 to 6.5 mm. This inner diameter is also measured at the groove-free regions of the inner surface of the outer tube.

It lies within the scope of the invention that the grooves are distributed over the inner surface of the outer tube, namely preferably at equal and uniform angular spacings from each other. Advantageously, the grooves are parallel or substantially parallel to each other. A recommended embodiment of the invention is characterized in that the grooves are of rectangular or a substantially rectangular cross-section and/or a trapezoidal or a substantially trapezoidal cross-section. An alternative embodiment of the invention provides that the grooves are of triangular cross-section.

Advantageously, the radial depth t of the grooves is 0.15 to 0.40 mm, preferably, 0.20 to 0.35 mm and more preferably 0.20 to 0.30 mm. Preferably, the width b or the greatest width b of the grooves is 0.45 to 0.85 mm, preferably 0.50 to 0.80 mm and more preferably 0.55 to 0.75 mm. The term greatest width b refers here in particular to grooves of trapezoidal or triangular cross-section. Advantageously, the width b is measured transverse to the radial depth t of the grooves.

Advantageously, the outer tube is made of a thermoplastic elastomer or is made substantially of a thermoplastic elastomer. It is recommended to use a vulcanized thermoplastic elastomer (TPV) for the outer tube or as a material for the outer tube. Advantageously, the Shore hardness A of the thermoplastic elastomer is 70 to 90, preferably 75 to 88. It is recommended that the thermoplastic elastomer of the outer tube is heat-resistant up to 150 1C or at least up to 135 1C. Preferably, the inner tube is made of plastic or is made substantially of plastic and preferably is made of polyamide or is made substantially of polyamide. The inner tube can be formed as a single- or as a multi-layer tube.

The invention further teaches a method of detecting leakage at and/or in a fuel line using a fuel-line assembly, where a fluid - preferably under pressure - is introduced into the inner tube used or to be used as a fuel line, and at least one sensor checks if fluid escapes from the inner tube. This detection is enabled or facilitated in that, according to the invention, there is a space between the inner tube and the outer tube. According to one embodiment, the sensor can determine if there is a pressure drop in the inner tube. If there is a leak in the inner tube, the fluid can flow through the leak into the gap between the inner tube and the outer tube thereby cause a pressure drop in the inner tube. In the case of the above-described fuel-line assemblies known from the prior art, such a measurement was not possible or not readily possible. Furthermore, a sensor can also check if fluid has gotten into the gap between the inner tube and the outer tube. It is also possible to detect a leak during an underwater test if bubbles of the fluid escape from the fuel-line assembly. It lies within the scope of the invention that the detection method is carried in the fuel-free state of the inner tube or the fuel line. Advantageously, the method according to the invention operates with a pressurized gas, in particular with compressed air, as the fluid.

The invention is based on the recognition that the fuel-line assembly according to the invention is characterized by an optimal thermal insulation, and that this thermal insulation is significantly better than in the case of prior-art fuel-line assemblies. In this respect, the fuel-line assembly according to the invention also ensures an effective protection or heat protection against high temperatures in the engine compartment of a motor vehicle, or against fire in the engine compartment of a motor vehicle. With the fuel-line assembly according to the invention it is also possible to effectively absorb or compensate for disadvantageous mechanical damage from the engine compartment. It is also to be emphasized that the fuel-line assembly can be produced in a simple and cost-effective manner. Known from practice are in particular fuel-line assemblies with outer tubes in the form of corrugated tubes. These corrugated tubes are relatively difficult to install and generate noise. In contrast to this, the fuel-line assembly according to the invention - in particular in the case of a smooth outer surface of the outer tube - is characterized by a simper installation in the motor vehicle and also by lower noise generation. Furthermore, the invention is based on the knowledge that a simple detection of leakage at and/or in the fuel line is possible with the fuel-line assembly according to the invention. This applies in particular also for leakage in the region of a connector or quick connector connected to the fuel-line assembly. It is further to be noted that the method according to the invention can be carried out in a simple and cost-effective manner.

The invention is explained in more detail hereinafter with reference to a drawing that only shows one illustrated embodiment. In the figures, illustrated schematically:
- Fig. 1: is a perspective view of an unheated fuel-line assembly according to the invention,
- Fig. 2: is a section through the structure of FIG. 1,
- Fig. 3: is like FIG. 2 but shows a further embodiment, and
- Fig. 4: is a schematic view of a device for detecting leakage at and/or in a fuel line.

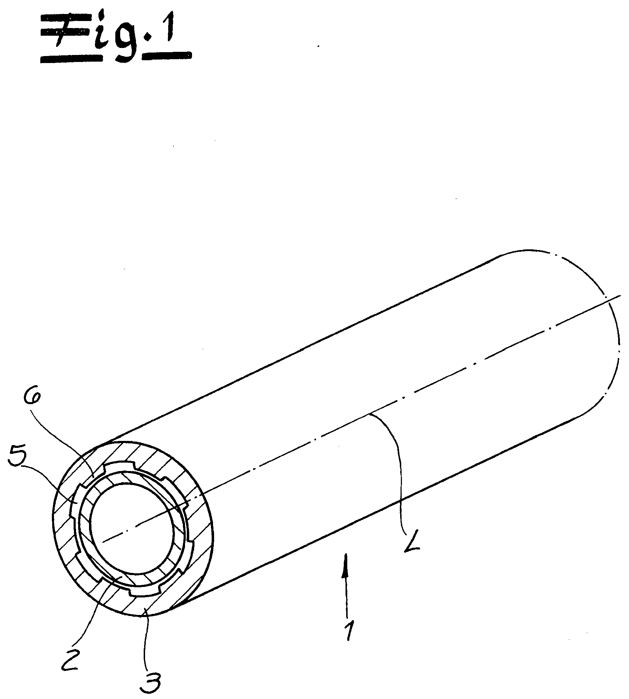

Fig. 1 shows an unheated fuel line 1 according to the invention. This fuel-line assembly 1 is provided in particular for use in a motor vehicle. The fuel-line assembly 1 has an inner tube 2 as a fuel line and also has an outer tube 3 that surrounds the inner tube with a spacing a. In the gap between the inner tube 2 and the outer tube 3, there is air or an air layer for thermal insulation. Advantageously, and in the illustrated embodiment, the inner tube 2 is concentric to the outer tube 3, or the inner tube 2 is concentrically surrounded by the outer tube 3. Thus, the inner tube 2 and the outer tube 3 are coaxial to each other. Preferably, and in the illustrated embodiment, the spacing a between the inner tube 2 and the outer tube 3 is uniform or constant around the inner tube 2 and the outer tube 3. Apart from that, preferably, and in the illustrated embodiment, the inner tube 2 and the outer tube 3 are cylindrical.

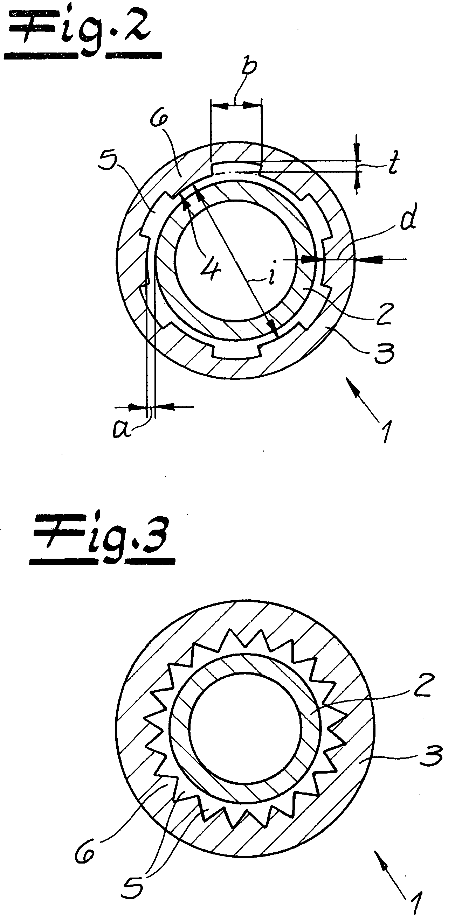

A plurality of grooves 5 are provided in the inner surface 4 of the outer tube 3 that faces toward the inner tube 2. Preferably, and in the illustrated embodiment, the grooves 5 extend over the entire length of the outer tube 3 longitudinally of the outer tube 3. Preferably in the illustrated embodiment, the grooves 5 are spaced around the inner surface of the outer tube 3, namely preferably at equal and uniform angular spacings (see Figs. 2 and 3). Advantageously, and in the embodiments illustrated in the figures, the grooves 5 are parallel to each other and parallel to a longitudinal center axis L of the inner tube 2 and the outer tube 3.

In the embodiment illustrated in the Figs. 1 and 2, the grooves 5 are of trapezoidal cross-section. As a result, the webs 6 between the grooves 5 also have such a trapezoidal cross-section. The radial depth t of the grooves 5 in the illustrated embodiment may be 0.20 to 0.30 mm. Advantageously, the greatest angular width b of the grooves 5 in the illustrated embodiment is 0.55 to 0.75 mm. The radial thickness d of the outer tube 3 in the illustrated embodiment may be 2.5 to 2.7 mm. Recommendably, and in the illustrated embodiment, the inner diameter i of the outer tube 3 is 5.0 to 6.5 mm. Apart from that, in the illustrated embodiment according to Fig. 3, the grooves 5 are of triangular cross-section.

The drawing preferably shows in the illustrated embodiment that the outer surface of the outer tube 3 is smooth and unprofiled. According to a particularly preferably embodiment, the outer tube 3 is made of a vulcanized thermoplastic elastomer. The inner tube 2 advantageously is made of polyamide.

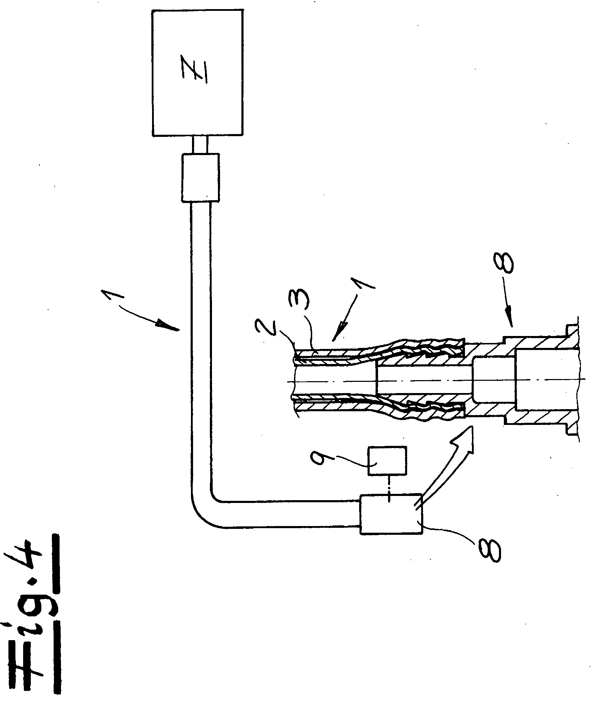

Fig. 4 shows a device for carrying out a method of detecting leakage at and/or in a fuel line. This method is carried out with a fuel-line assembly 1 according to the invention. Here, preferably, and in the illustrated embodiment, compressed air from a compressed air source 7 is introduced into the inner tube 2 used as a fuel line. At least one sensor 9 checks or determines if there is a pressure drop in the inner tube 2. If this is the case, this is an indication of a leak at and/or in the inner tube 2. Apart from that, a connector or quick connector 8 is connected to the end of the fuel-line assembly 1 illustrated in Fig. 4. This connector or quick connector 8 can connect the fuel-line assembly 1 to a further fuel line or to a further fuel-line assembly 1, or also to other fluid-conveying components.

## Claims

1. An unheated fuel-line assembly (1), in particular for use in a motor vehicle, where an inner tube (2) is provided as a fuel line and an outer tube (3) is provided that surrounds the inner tube (2) with a spacing a, and where an inner surface (4) of the outer tube (3) that faces toward the inner tube (2) is formed with a plurality of grooves (5) that extend at least over a portion of the length of the outer tube (3) longitudinally of the outer tube (3), **characterized in that**, an angular width b or the greatest width b of the grooves (5) is 0.45 to 0.85 mm, preferably 0.50 to 0.80 mm, and more preferably 0.55 to 0.75 mm.

2. The unheated fuel-line assembly according to claim 1, wherein the inner tube (2) and/or the outer tube (3) are/is cylindrical or substantially cylindrical.

3. The unheated fuel-line assembly according to claim 1 or claim 2, wherein the inner tube (2) is concentric to the outer tube (3) or is surrounded concentrically by the outer tube (3).

4. The unheated fuel-line assembly according to any one of the claims 1 to 3, wherein the thickness d of the outer tube (3) is 2.3 to 3.0 mm, preferably 2.4 to 2.8 mm and more preferably 2.5 to 2.7 mm.

5. The unheated fuel-line assembly according to any one of the claims 1 to 4, wherein the spacing a of the inner surface (4) of the outer tube (3) from the outer surface of the inner tube (2) is 0.3 to 2 mm, preferably 0.4 to 1.7 mm.

6. The unheated fuel-line assembly according to any one of the claims 1 to 5, wherein the grooves (5) are distributed over the inner surface of the outer tube (3), namely preferably at equal and/or uniform spacings.

7. The unheated fuel-line assembly according to any one of the claims 1 to 6, wherein the grooves (5) are parallel to each other or substantially parallel to each other.

8. The unheated fuel-line assembly according to any one of the claims 1 to 7, wherein the grooves (5) are of rectangular and/or trapezoidal cross-section.

9. The unheated fuel-line assembly according to any one of the claims 1 to 8, wherein the grooves (5) are of triangular cross-section.

10. The unheated fuel-line assembly according to any one of the claims 1 to 9, wherein a radial depth t of the grooves (5) is 0.15 to 0.4 mm, preferably 0.20 to 0.35 mm, and more preferably 0.20 to 0.30 mm.

11. The unheated fuel-line assembly according to any one of the claims 1 to 10, wherein the outer tube (3) is made of a thermoplastic elastomer or is made substantially of a thermoplastic elastomer.

12. A method of detecting leakage at and/or in a fuel line using a fuel-line assembly (1) according to any one of the claims 1 to 11, wherein a fluid - preferably under pressure - is introduced into the inner tube (2) used or to be used as a fuel line, and at least one sensor (9) determines if there is a pressure drop in the inner tube (2).

13. The method according to claim 12, the method operating with a pressurized gas, in particular compressed air, as the fluid.

## Patentansprüche

1. Ungeheizte Kraftstoffleitungsanordnung (1), insbesondere für die Verwendung in einem Kraftfahrzeug, wobei ein innerer Schlauch (2) als Kraftstoffleitung vorgesehen ist und ein äußerer Schlauch (3) vorgesehen ist, der den inneren Schlauch (2) in einem Abstand a umgibt, und wobei eine innere Oberfläche (4) des äußeren Schlauches (3), die zum inneren Schlauch (2) zeigt, mit mehreren Vertiefungen (5) gebildet ist, die sich wenigstens über einen Teil der Länge des äußeren Schlauches (3) in Längsrichtung des äußeren Schlauches (3) erstrecken,
**dadurch gekennzeichnet, dass** eine Umfangsbreite b oder die größte Breite b der Vertiefungen (5) 0,45 bis 0,85 mm beträgt, bevorzugt 0,50 bis 0,80 mm, und besonders bevorzugt 0,55 bis 0,75mm.

2. Ungeheizte Kraftstoffleitungsanordnung nach Anspruch 1, wobei der innere Schlauch (2) und/oder der äußere Schlauch (3) zylindrisch oder im Wesentlichen zylindrisch ist/sind.

3. Ungeheizte Kraftstoffleitungsanordnung nach Anspruch 1 oder 2, wobei der innere Schlauch (2) zum äußeren Schlauch (3) konzentrisch ist oder konzentrisch vom äußeren Schlauch (3) umgeben ist.

4. Ungeheizte Kraftstoffleitungsanordnung nach einem der Ansprüche 1 bis 3, wobei die Dicke d des äußeren Schlauches (3) 2,3 bis 3,0 mm beträgt, bevorzugt 2,4 bis 2,8 mm und besonders bevorzugt 2,5 bis 2,7 mm.

5. Ungeheizte Kraftstoffleitungsanordnung nach einem der Ansprüche 1 bis 4, wobei der Abstand a der inneren Oberfläche (4) des äußeren Schlauchs (3) von der äußeren Oberfläche des inneren Schlauches (2) 0,3 bis 2 mm beträgt, bevorzugt 0,4 bis 1,7 mm.

6. Ungeheizte Kraftstoffleitungsanordnung nach einem der Ansprüche 1 bis 5, wobei die Vertiefungen (5) über die innere Oberfläche des äußeren Schlauches (3) verteilt sind, d.h. bevorzugt in gleichen und/oder gleichmäßigen Abständen.

7. Ungeheizte Kraftstoffleitungsanordnung nach einem der Ansprüche 1 bis 6, wobei die Vertiefungen (5) parallel zueinander sind oder im Wesentlichen parallel zueinander sind.

8. Ungeheizte Kraftstoffleitungsanordnung nach einem der Ansprüche 1 bis 7, wobei die Vertiefungen (5) einen rechtwinkligen und/oder trapezförmigen Querschnitt aufweisen.

9. Ungeheizte Kraftstoffleitungsanordnung nach einem der Ansprüche 1 bis 8, wobei die Vertiefungen (5) einen dreieckigen Querschnitt aufweisen.

10. Ungeheizte Kraftstoffleitungsanordnung nach einem der Ansprüche 1 bis 9, wobei eine radiale Tiefe t der Vertiefungen (5) 0,15 bis 0,4 mm beträgt, bevorzugt 0,20 bis 0,35 mm, und besonders bevorzugt 0,20 bis 0,30 mm.

11. Ungeheizte Kraftstoffleitungsanordnung nach einem der Ansprüche 1 bis 10, wobei der äußere Schlauch (3) aus einem thermoplastischen Elastomer oder im Wesentlichen aus einem thermoplastischen Elastomer besteht.

12. Verfahren zur Detektion eines Lecks an und/oder in einer Kraftstoffleitung unter Verwendung einer Kraftstoffleitungsanordnung (1) nach einem der Ansprüche 1 bis 11, wobei eine Flüssigkeit - bevorzugt unter Druck - in den inneren Schlauch (2) eingebracht wird, der als Kraftstoffleitung verwendet wird oder verwendet werden soll, und wenigstens ein Sensor (9) bestimmt, ob in dem inneren Schlauch (2) ein Druckabfall stattfindet.

13. Verfahren nach Anspruch 12, wobei das Verfahren mit einem unter Druck gesetzten Gas, insbesondere komprimierter Luft, als Flüssigkeit arbeitet.

## Revendications

1. Ensemble de conduites de carburant non chauffées (1), en particulier pour l'utilisation dans un véhicule à moteur, dans lequel un tube intérieur (2) est fourni en tant que conduite de carburant et un tube extérieur (3) étant fourni, lequel entoure le tube intérieur (2) avec un espacement a, et dans lequel une surface intérieure (4) du tube extérieur (3) qui fait face vers le tube intérieur (2) est formée par une pluralité de rainures (5) qui s'étendent au moins au-dessus d'une partie de la longueur du tube extérieur (3) de manière longitudinale au tube extérieur (3),
**caractérisé en ce qu'**une largeur angulaire b, ou la plus grande largeur b des rainures (5) est de 0,45 à 0,85 mm, de préférence de 0,50 à 0,80 mm, et de manière davantage préférée, de 0,55 à 0,75 mm.

2. Ensemble de conduites de carburant non chauffées selon la revendication 1, dans lequel le tube intérieur (2) et/ou le tube extérieur (3) est/sont cylindrique(s) ou sensiblement cylindrique(s).

3. Ensemble de conduites de carburant non chauffées selon la revendication 1 ou 2, dans lequel le tube intérieur (2) est concentrique par rapport au tube extérieur (3) ou est entouré concentriquement par le tube extérieur (3).

4. Ensemble de conduites de carburant non chauffées selon l'une quelconque des revendications 1 à 3, dans lequel l'épaisseur d du tube extérieur (3) est de 2,3 à 3,0 mm, de préférence de 2,4 à 2,8 mm, et de manière davantage préférée, de 2,5 à 2,7 mm.

5. Ensemble de conduites de carburant non chauffées selon l'une quelconque des revendications 1 à 4, dans lequel l'espacement a de la surface intérieure (4) du tube extérieur (3) par rapport à la surface extérieure du tube intérieur (2) est de 0,3 à 2 mm, de préférence de 0,4 à 1,7 mm.

6. Ensemble de conduites de carburant non chauffées selon l'une quelconque des revendications 1 à 5, dans lequel les rainures (5) sont réparties sur la surface intérieure du tube extérieur (3), à savoir de préférence selon des espacements égaux et/ou réguliers.

7. Ensemble de conduites de carburant non chauffées selon l'une quelconque des revendications 1 à 6, dans lequel les rainures (5) sont parallèles les unes par rapport aux autres ou sensiblement parallèles les unes par rapport aux autres.

8. Ensemble de conduites de carburant non chauffées selon l'une quelconque des revendications 1 à 7, dans lequel les rainures (5) sont d'une section transversale rectangulaire et/ou trapézoïdale.

9. Ensemble de conduites de carburant non chauffées selon l'une quelconque des revendications 1 à 8, dans lequel les rainures (5) sont d'une section transversale triangulaire.

10. Ensemble de conduites de carburant non chauffées selon l'une quelconque des revendications 1 à 9, dans lequel une profondeur radiale t des rainures (5) est de 0,15 à 0,4 mm, de préférence de 0,20 à 0,35 mm, et de manière davantage préférée, de 0,20 à 0,30 mm.

11. Ensemble de conduites de carburant non chauffées selon l'une quelconque des revendications 1 à 10, dans lequel le tube extérieur (3) est formé par un élastomère thermoplastique ou est sensiblement formé par un élastomère thermoplastique.

12. Procédé de détection d'une fuite sur et/ou dans une conduite de carburant en utilisant un ensemble de conduites de carburant (1) selon l'une quelconque des revendications 1 à 11, dans lequel un fluide - de préférence sous pression - est introduit dans le tube intérieur (2) utilisé, ou devant être utilisé en tant que conduite de carburant, et au moins un capteur (9) déterminant s'il y a une chute de pression dans le tube intérieur (2).

13. Procédé selon la revendication 12, le procédé fonctionnant avec un gaz sous pression, en particulier de l'air comprimé, en tant que fluide.
